# EUROPEAN PATENT SPECIFICATION

(11) **EP 0 989 657 B1**
(45) Date of publication and mention of the grant of the patent: **23.02.2005**
(21) Application number: 99118718.8
(22) Date of filing: 20.10.1997
(51) Int. Cl.: H02K 9/06, H02K 3/24, H02K 9/22

(54) **Alternator for vehicle**
Wechselstromgenerator für Kraftfahrzeuge
Alternateur pour véhicule

(30) Priority: 10.03.1997 JP 5498897; 28.05.1997 WO PCT/JP97/01840
(43) Date of publication of application: 29.03.2000
(62) Divisional of application: 97944186.2
(73) Proprietor: DENSO CORPORATION, Kariya-City Aichi-Pref. 448 (JP)
(72) Inventor: Kusase, Shin, Kariya-shi, Aichi-pref., 448-8661 (JP); Shiga, Tsutomu, Kariya-shi, Aichi-pref., 448-8661 (JP)
(74) Representative: Winter, Brandl & Partner

(56) References cited:
- GB-A- 2 196 189
- JP-Y- 1 027 406
- PATENT ABSTRACTS OF JAPAN vol. 009, no. 010 (E-290), 17 January 1985 (1985-01-17) -& JP 59 159638 A (NIPPON DENSO KK), 10 September 1984 (1984-09-10) -& JP 04 024939 B
- PATENT ABSTRACTS OF JAPAN vol. 005, no. 019 (E-044), 4 February 1981 (1981-02-04) -& JP 55 147941 A (MITSUBISHI ELECTRIC CORP), 18 November 1980 (1980-11-18)

## Description

### TECHNICAL FIELD

The present invention relates to an alternator for a vehicle which is mounted on a passenger car, a truck or the like.

### BACKGROUND ART

Various improvements have been proposed to make an alternator for a vehicle more compact and more powerful.

JP-A-6-46550 proposes using permanent magnets for increasing the output power of an alternator. However, in order to comply with the demand for reducing the size of the alternator, the size of the cooling fan must be reduced. This reduces an amount of the cooling air, while Joule heat and, in turn, temperature rise increases as the output power increases. In other words, in order to provide a compact and powerful alternator, it is important to control temperature rise of, in particular, the heat dissipation of the armature coil in a limited space.

Under these circumferences, JP-A-7-194060 discloses a water cooling system for an alternator instead of the air cooling system because of more cooling effect. However, it is apparent that the water cooling system inevitably requires water pipes and a water jacket disposed in the alternator and, therefore, the size and weight thereof increase. This is contrary to the object.

In a common air cooling system, the coil-ends of an armature coil is mainly cooled, and various improvements thereof are proposed in the following publications: JP-B2-4-24939, JP-A-63-59744, JP-Y2-1-27406 and JP-A-57-132743.

Any one of those system has the following problems even although it has some effect.

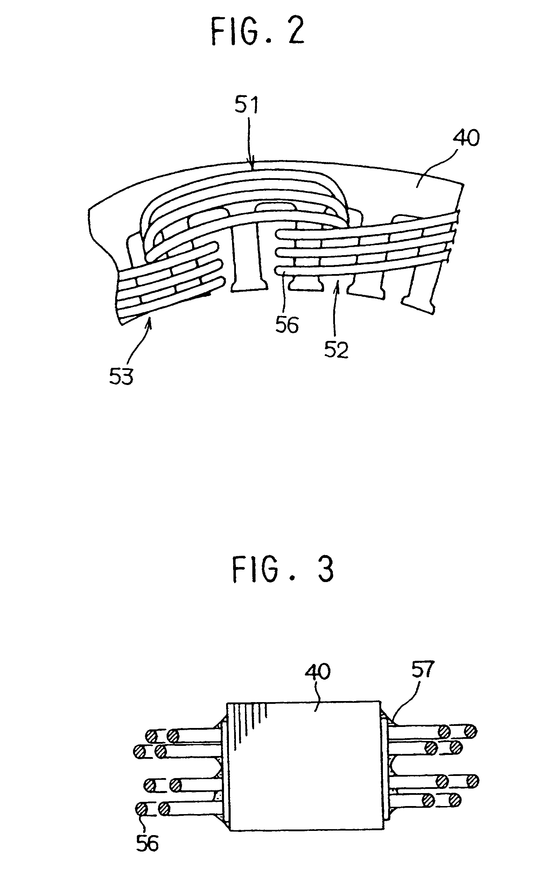

In JP-B2-4-24939, some spaces are provided between respective phase-windings so that cooling air can pass therethrough. However, the cooling air blows only on a part of the winding as the parallel flow whose cooling effect is proportional to 0.6 th power of a wind velocity and is not sufficient as compared with the right-angled flow whose cooling effect is proportional to a square of a wind velocity. Fig. 3 of the publication shows a coil end having wires spaced apart from one another, and cooling air passes the spaces between the wires. Although such a structure provides some cooling effect, an amount of the cooling air is limited because a half of the coil end is closely covered by another coil end as shown in Figs. 2 and 3 of the publication.

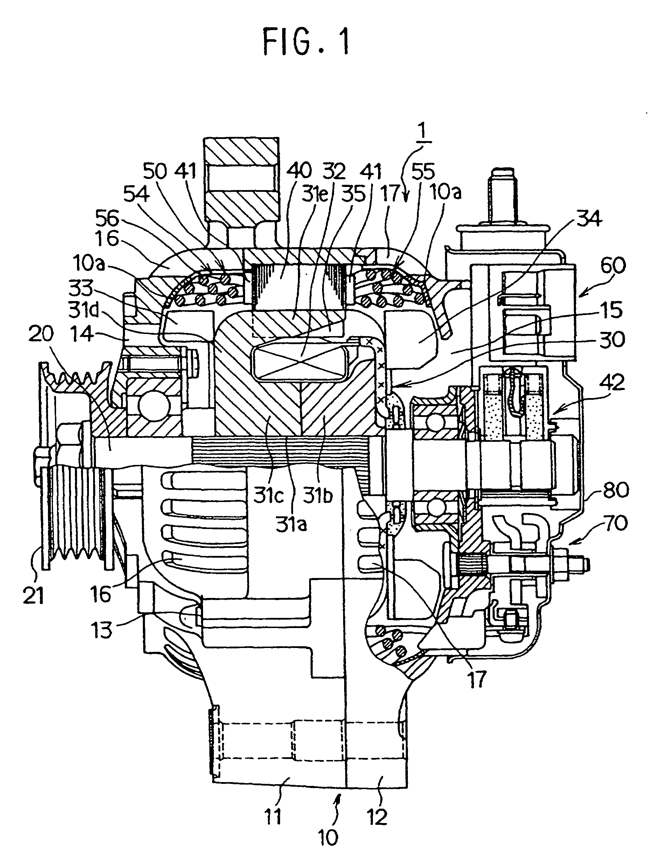

In JP-A-63-59744, the coil end has some spaces for reducing the resistance of draft, and a cooling fan is provided to blow cooling air thereon in the radially outside direction to increase the cooling effect of the coil and other parts. However, this structure, in which a Lundell type rotor has an axially long field coil and thick pole-core-discs to provide sufficient magnetic field as shown in Fig. 1 of the publication, has little effect because the fan is positioned between the middle and the top of the coil end and does not cover all the coil end. In other words, although the spaces for the cooling air in the limited portion of the coil ends which correspond to the fan pass the cooling air, the cooling air does not cool the whole coil end.
Because drafting spaces are formed circumferentially at equal intervals to correspond to the winding pitch of the coil ends, the cooling air compressed by the fan blades is decompressed periodically at the drafting spaces, thereby sounding a siren or pitch noises.

In addition, the coil end units are shifted to provide spaces after the coil ends are aligned and flattened to have sufficient surfaces. As a result, the axial length of the coil end is necessarily increased. This is also contrary to the object.

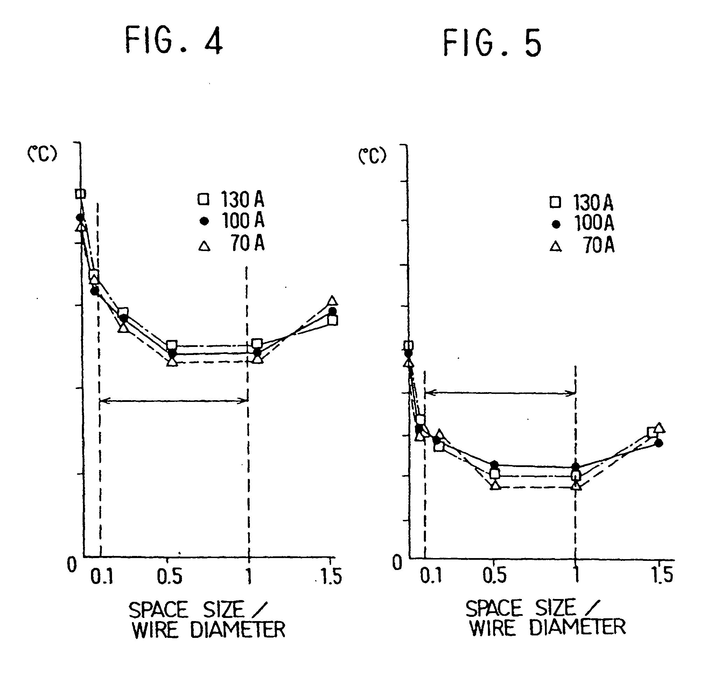

JP-Y2-1-27406 shows spaces between coils of the same phase winding. However, it does not show spaces between coils of different phase windings, as JP-B2-4-24939 does not. For example, as shown in Fig. 4 of the publication, most portions of a coil end other than the section A-A is closely covered by another coil end of a different phase winding, thereby limiting the cooling effect.

Although various trials to dispose each element of coil end has been made to improve the ventilation of the cooling air and the heat dissipation. However, although each one of them has a structure which has spaces between coil elements of the same coil end and is aligned with another and flattened to provide a large cooling air passage, the passage is covered by another coil end thereby increasing the draft resistance. And, only a limited portion near the fan is cooled and the fan noises increase considerably, causing troubles in practical operation.

### DESCRIPTION OF THE INVENTION

The object of the present invention is to solve the above-stated problems.

Another object of the present invention is to provide a structure for introducing a cooling medium inside the coil ends, thereby improving heat dissipation of the coil ends.

Another object of the present invention is to reduce noises in addition to the heat dissipation.

These objects are solved by an alternator in accordance to claim 1. Advantageous embodiments thereof are defined by the subclaims.

Preferably, the coil ends are spaced apart from one another to form a zigzag-shape or lattice work in a section. In other words, they are spaced apart one another like star clusters so that the cooling air can pass through the inside of the coil-end portions. The cooling air collides with each of the coil ends and zigzags therein so that whole surfaces of all the wires can receive high speed cooling air and heat exchange is improved, thereby increasing heat dissipation and cooling effect.

Because the cooling air causes numerous reflection and absorption of sound waves repeatedly with a large number of coils and spaces being disposed therearound, noises can be reduced drastically. In addition, because the coil end portions are not flat but bulged like star clusters, the cooling air is scarcely impeded. It is possible that a plurality of the coil ends are bundled to form a plurality of bundles and spaces among the bundles. If the number of the coil ends in a bundle increases, the surface of each of the coil ends exposed to the cooling air decreases to reduce the heat dissipation. Therefore, it is preferable that each bundle has two or three coil ends.

Preferably, a large number of coil ends are evenly distributed in one of the coil-end portions. However, they can be divided into a plurality of groups in either axial or radial section thereof. For example, comparatively small spaces are distributed in each of X,Y and Z-phase-windings, and the coil ends are formed to extend from base portions thereof at an angle from one another. Accordingly, the armature coil can be mounted easily.

Preferably, the ratio of the diameter of a wire of the coil ends to each size of the spaces in the coil-end portions is fixed to provide a maximum heat dissipation. Preferably, the size of the spaces is between the diameter of the wire and about 1/10 of the diameter. Therefore, the coil ends inside the coil-end portions can receive the cooling air sufficiently.

Preferably, a plurality of the coil ends extending from one of slots are bonded by an impregnant adhesive only at the base portions to close the spaces. The base portions, which are subject to a maximum deformation moment, are reinforced by an adhesive, and other portions have enough open spaces for heat dissipation so that both vibration resistance and heat dissipation can be improved.

Preferably, each of the coil ends inside the coil-end portions is arranged to improve the heat dissipation. A plurality of coil ends are formed into layers so that the cooling air can pass between layers and reach deep in the coil-end portions. The coil ends can be disposed in parallel with the rotor axis, on top of one another in the radial direction from the rotor axis or like the spokes of a wheel. The coil ends can be disposed in multiple layers, and the spaces are formed between the coil ends and between the layers ends.

Preferably, cooling air passages are formed between the layers to open at axial ends of the coil-end portions. Thus, the cooling medium can be introduced from the axial ends of the coil-end portions. The passages of the cooling medium are disposed along the center axis of the coil ends so that the cooling medium can be supplied to the inside of the axially extending coil-end portions toward both inner and outer directions evenly, thereby providing even heat dissipation of the coil-end portions.

Preferably, a cooling fan is disposed radially inside the coil-end portions, one ends of the coil-end portions are disposed radially inside the inner periphery of the stator core, and the coil-end portions are tapered to cover the cooling fan. Therefore, the coil ends can be distributed wide.

The coil-end portions can be disposed near the frame at a distance approximately equal to a size of the spaces. Therefore, the cooling medium can pass the inside of the coil-end portions more easily than between the coil-end portions and the frame, thereby improving the heat dissipation.

The coil-end portions can be in contact with the frame to increase the resistance of draft and cooling medium passing through the inside of te coil-end portions, so that heat of te coil ends can be transmitted to the frame, thereby lowering the temperature of the coil-end portions.

Prefereably, a flexible heat conductive insulating member is disposed near or in contact with the coi-end portions to insulate the coil end from the frame and transfer the heat of the coil ends to the frame if the coi-end portions are disposed near the frame.

In order to increase the resistance of draft around the coil-end portions, the base portions, the base portions of the coil ends near the stator core - where the coil ends extend from the slots, and the cooling air can pass easily - may be provided with insulating films extending from opposite ends of the stator core. Thus the cooling medium can be introduced into the inside of the coil end from portions between the coil-end portions and the stator core.

A centrifugal cooling fan rotatable with the rotor can be disposed radially inside the coil-end portions closely thereto, whereby the coil-end portions are disposed in an area where the wind power driven by the cooling fan is the strongest. Accordingly, high speed air blows can be supplied to the inside of the coil-end portions directly in addition to the cooling air caused by a difference in the resistances of draft between portions around and inside coil-end portions, thereby providing highly effective heat dissipation. The coil-end portions composed of tight bundle of the coil ends with few spaces must be located remote from the cooling fan. For example, the distance from the cooling fan is about 5 % of the diameter of the cooling fan. On the other hand, the coil-end portions according to the present invention, which have a large number of spaces with the sufficiently low resistance of draft, can be located as near as 2 % of the diameter of the cooling fan from the same.

Preferably, the rotor has a Lundell type pole core, the cooling fan and a barrier member for closing U-shaped openings of a disc portion of the pole core thereby forming wall surfaces of the U-shaped opening into a fan, so that the quantity and speed of the cooling medium flowing toward the coil-end portions can be increased, thereby increasing the heat dissipation. In addition, the U-shaped openings are disposed to correspond to the fan blades of the cooling fan to generate the cooling air jointly by the cooling fan and the wall surfaces of the U-shaped openings.

The barrier member can be disposed to correspond to the base portions of an end of the stator core. Therefore, the cooling air can be supplied sufficiently by the cooling fan and the wall surfaces of the U-shaped openings.

The barrier member can be a non-magnetic member, a permanent magnet having the polarity to suppress leakage flux between the poles, or a magnet holder.

Preferably, the cooling medium is introduced from radially outside the coil-end portions. Therefore, cooling air of a comparatively low temperature, which is not heated by a high temperature member such as the rotor, can be supplied to the coil-end portions, thereby increasing the heat dissipation.

Each of the coil-end portions of the armature winding can be formed by dividing wires extending from the same slot into two groups respectively directing opposite circumferential directions. Therefore, the number of the coil ends can be reduced, thereby providing sufficient spaces easily.

The armature winding can comprise double-layered wave-wound windings. Therefore, the wave-wound coils can be formed by deforming flat bundles of coils to be inserted into the slots easily.

The armature winding can comprise 2π/3-short-pitch windings. Therefore, interference between the coil ends is eliminated and the spaces between the coil ends can be provided easily.

The armature winding can be provided with compact coil ends, and each of the layers can be shifted easily to pass the cooling medium between the layers easily.

### BRIEF DESCRIPTION OF THE DRAWINGS

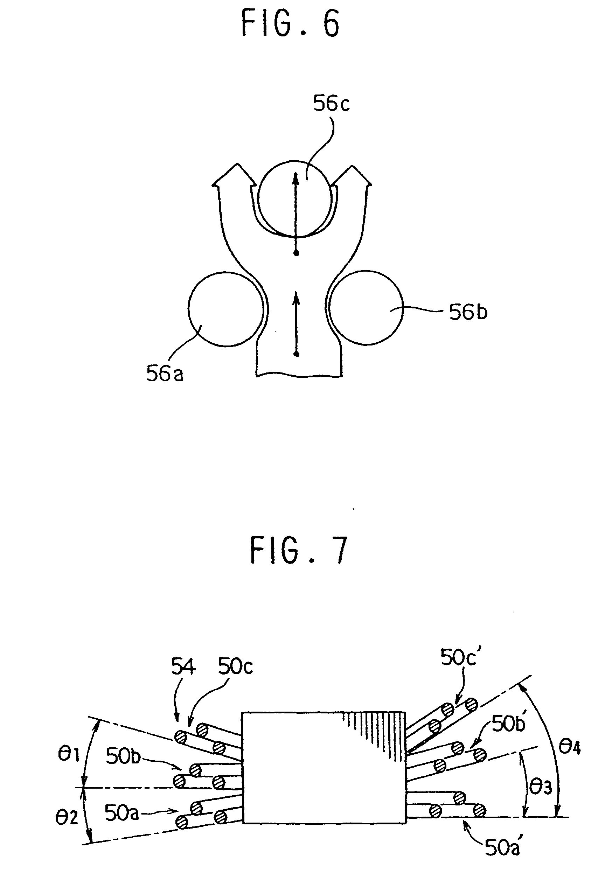

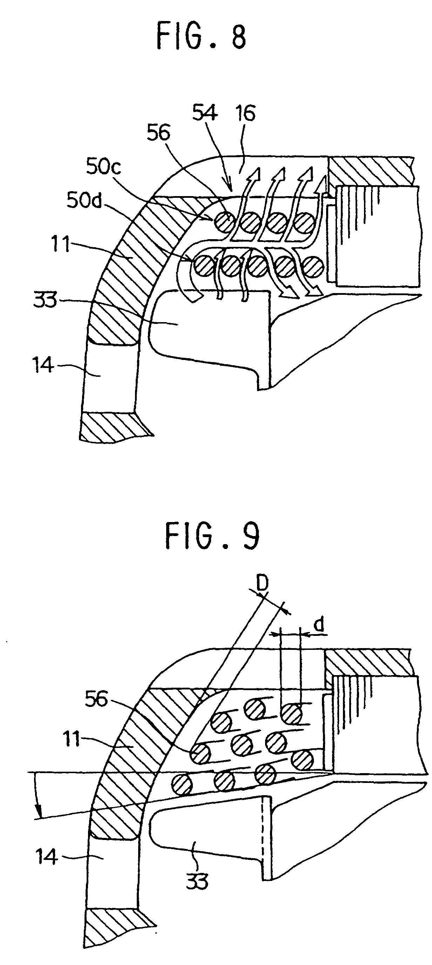

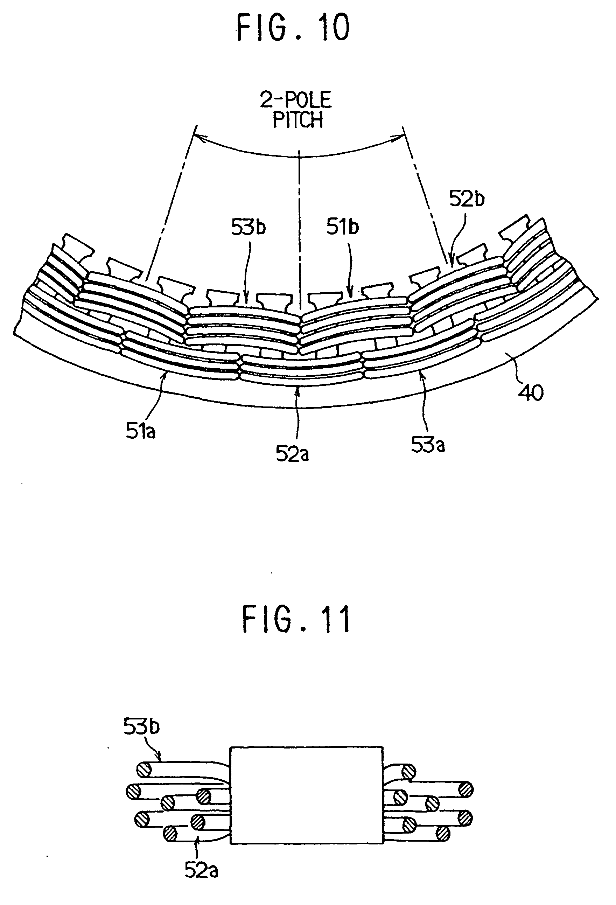

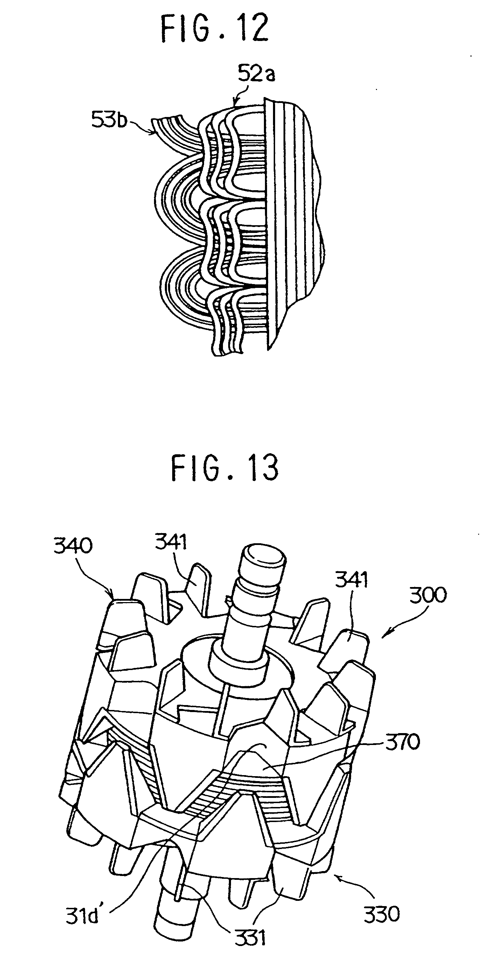

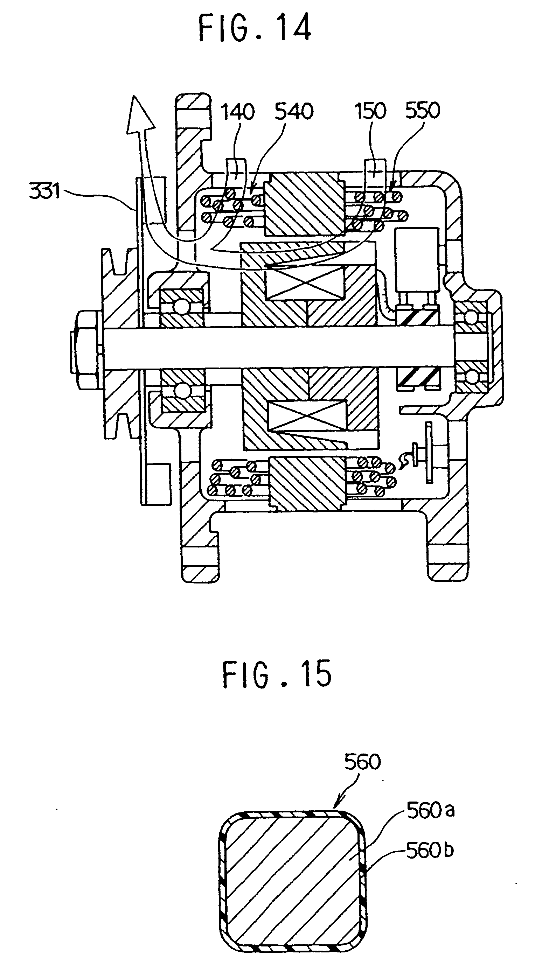

Fig. 1 is a longitudinal cross-sectional view illustrating an alternator according to an embodiment of the present invention; Fig. 2 is a plan view illustrating a portion of a stator having the coil ends; Fig, 3 is a cross-sectional view illustrating a portion of the stator having coil ends; Fig. 4 is a graph showing a test result; Fig. 5 is a graph showing a test result; Fig. 6 is a schematic view illustrating the flow of cooling air in the coil ends; Fig. 7 is a cross-sectional fragmental view illustrating a portion according to another embodiment of the present invention; Fig. 8 is a cross-sectional fragmental view illustrating a portion according to another embodiment of the present invention; Fig. 9 is a cross-sectional fragmental view illustrating a portion according to another embodiment of the present invention; Fig. 10 is a plan view illustrating the coil-end portion according to another embodiment of the present invention; Fig. 11 is a cross-sectional view of the coil-end portion illustrated in Fig. 10; Fig. 12 is a plan view of the coil-end portion illustrated in Fig. 10; Fig. 13 is a perspective view illustrating a rotor according to another embodiment of the present invention; Fig. 14 is a cross-sectional view of an alternator according to another embodiment of the present invention; and Fig. 15 is a cross-sectional view illustrating a magnet wire according to another embodiment of the present invention.

### BEST MODE OF CARRYING OUT THE INVENTION

Alternators according to an embodiment of the present invention is described hereafter.

A basic structure of an alternator for a vehicle is described with reference to drawings. Fig. 1 is a fragmental cross-sectional view illustrating an alternator for a vehicle.

The alternator 1 has a frame 10. The frame 10 is composed of a front frame 11 and a rear frame 12, which are fastened by a plurality of bolts 13 each other. The frame 10 has inlet openings 14 and 15 of cooling air on the opposite ends thereof. The frame 10 also has a plurality of slit-like outlet openings 16 and 17 of the cooling air on the circumferential surfaces thereof around later-described cooling fans.

A rotary shaft 20 is rotatably supported by the frame 10. A pulley 21 is fixed to an end of the rotary shaft to receive engine torque. A rotor 30 is carried by the shaft 20 at the middle thereof. A current collector 42 composed of slip rings and brushes is disposed at a rear portion of the shaft 20 to supply field current to a field coil 32.

The rotor 30 has a Lundell type pole core 31 and a field coil 32 disposed in the pole core 31. The pole core 31 is composed of a pair of claw poles 31a and 31b. Each of the claw poles 31a and 31b has a boss portion 31c fitted to the shaft 20 and a disc portion extending radially outside from the boss portion 31c and a plurality of claw pieces 31e. In Fig. 1, portions 31c, 31d and 31e of the claw pole 31a are indicated.

Cooling fans 33 and 34 are fixed to opposite ends of the rotor 30. The front cooling fan 33 has fan blades for a centrifugal fan and fan blades for a mixed flow fan. Each of the fan blades for a mixed flow fan is disposed on a surface of the disc 31d along a side of U-shaped openings formed between the adjacent claw pieces. The rear cooling fan 34 has centrifugal fan blades.

The rotor 30 has an auxiliary magnet unit 35 for increasing effective magnetic flux. The auxiliary magnet unit 35 is disposed between the claw pieces 31e so that the auxiliary magnet unit opposes magnetic force of the claw piece adjacent thereto. The auxiliary magnet unit 35 is composed of a plurality of permanent magnets each of which is disposed between a pair of claw pieces and a magnet holder for preliminarily integrating all the permanent magnets. The magnet holder has boxes holding the permanent magnets, each of which is disposed between two of the claw pieces. The permanent magnets are magnetized to oppose the adjacent claw pieces, and the magnet holder is made of non-magnetic resinous material. The auxiliary magnet unit 35 is disposed so that the axial ends thereof correspond to the axial ends of the stator core 40. The axial ends of the auxiliary magnet unit 35 functions as a partial barrier of cooling air flowing between the claw pieces 31e. Accordingly, the wall surface (e.g. 31d in Fig. 13) of the U-shaped opening causes air flow flowing radially outward. Incidentally, the permanent magnets may be exposed from the magnet holders on the axial ends of the auxiliary magnet unit 35.

The stator core 40 is disposed around the rotor 30. The stator core 40 is fixed to the frame 10. The stator core 40 is composed of cylindrical laminated steel sheets and has a plurality of slots on the inner periphery thereof.

An armature winding 50 composed of an insulated magnet wires is wound on the stator core 40. The armature winding 50 has portions disposed in the slots and coil-end portions 54 and 55 extending axially from the stator core 40. Fig. 2 is a perspective view illustrating the armature winding 50 and the stator 40.

The armature winding 50 is a three-phase winding composed of an X-phase-winding, a Y-phase-winding and a Z-phase-winding. The coil-end portions 54 and 55 are composed of a plurality of coil ends 56 crossing over the slots.

Portions of the coil ends 56 on the outside of the coil-end portions 54 and 55 are in contact with inner peripheries of the frames 11 and 12 via heat conductive insulating layers 10a. The insulating layers 10a are formed on the entire inside surface of the frame. However, it can be formed partly on the portions facing the coil ends 56. In order to make the layer adhere to the coil ends 56, they are brought into contact with the layer before it dries. On the other hand, the material having an adhesive characteristic for a while can be used as the layer. An adhesive can be applied to the coil ends after they are in contact with the layer.

A heat conductive insulating film or mold can be used instead of the layer. In this case, an adhesive material for the film or mold is selected, or an adhesive is applied on the coil ends in order to make the member adhere to the coil ends.

A voltage regulator 60 and a rectifier 70 are mounted on the outer surface of the rear frame 12 and covered by a cover plate 80.

The basic operation of the alternator for a vehicle shown in Fig. 1 is described next. When the rotor 30 is driven by an engine, field current is supplied from the voltage regulator 60 through the current collector 42 to the field coil 32, and a rotating field is formed so that ac power is generated in the armature winding 50 on the stator core 40. The ac power is rectified by the rectifier 70 and supplied as the output power.

When the rotor 30 rotates, the cooling fans 33 and 34 also rotate to suck air from opposite ends thereof and discharge radially outside.

The cooling air taken in by the front cooling fan from the inlet opening 14 is divided into an air flow toward the coil-end portions 54 and an air flow along passages between the claw pieces 31e to cool the rotor 30. A part of the air flow is directed radially outward by the wall surfaces (e.g. 31d' in Fig. 13) of the U-shaped opening to the coil-end portions 54.

The cooling air taken in by the rear cooling fan from a plurality of inlet openings of the cover 80 cools the voltage regulator 60, the rectifier 70 and current collector 42, and is introduced through the inlet opening 15 and directed to the coil-end portions 55. The cooling air flowing along the passages between the claw pieces is directed radially outward to the coil-end portions 55 by the wall surfaces of the U-shaped openings of the rear claw pole 31b.

Thus, the cooling airs driven by the two cooling fans 33 and 34 cool various parts of the alternator 1. In particular, the air flows cool the coil ends 56 forming the coil-end portions 54 and 55 just before they are discharged.

The structure and operation of the coil-end portions 54 and 55 are described in more detail hereafter.

As shown in Fig. 1, the coil-end portions 54 and 55 are disposed in the air flow passages directed to the outlet openings 16 and 17. Each of the coil-end portions 54 and 55 is composed of a plurality of coil ends 56 arranged to distribute evenly to form spaces therebetween, each of which is as wide as the diameter of the wire of the coil ends.

As shown in Fig. 2, the coil ends 56 extending from each of the slots of the stator core 40 is bundled and bonded by an adhesive 57 at a base portion in front of the slot. The spaces between the coil ends 56 other than the base portions are not closed by the adhesive. In other words, each of the coil ends 56, which form each of coils 51, 52 and 53, has the spaces without the adhesive except the base portion thereof. Such spaces are formed between coils so that each one of the coil ends 56 of one phase-winding is spaced apart from another of the same phase-winding and also of a different phase-winding.

The coil ends 56 of the same phase-winding is divided radially into a plurality of layers as shown in Figs. 1 and 3. Each one of the coil ends 56 in an outside layer is disposed between adjacent two of the coil ends of an inside layer. In other words, one of the coil ends 56 of one of a plurality of the layers is disposed between two adjacent coil ends of another layer disposed inside thereof. Thus, each of the coil ends of one layer is disposed between two adjacent coils of another layer disposed radially inside of the former lair. The above relationship is applied to the coil ends of other coil layers.

Although the coil ends 56 are not bonded with one another except the base portion, the vibration resistance thereof is assured by bonding of the base portions and by the portions of the frame in contact with the outside surface of the coil-end portions 54 and 55.

The armature winding 50 inserted in the slots is covered by insulating films 41 to insulate the armature winding 50 from the stator core 40. The insulating films 41 extend axially from the opposite ends of the stator core 40 at the base portions of the coil ends to reduce the spaces between the bundles of the coil ends, thereby providing the draft resistance.

Accordingly, the coil-end portions 54 and 55 are disposed on the inner surfaces of the frames 11 and 12 very closely to increase the draft resistance of the air passages around the coil ends portions 54 and 55. The draft resistance of the base portions of the coil ends 56 is also increased by the insulating film 41.

On the other hand, the coil-end portions 54 and 55 have a plurality of coil ends 56 spaced apart from one another to provide a plurality of air passages, thereby reducing the draft resistance. Therefore, the draft resistance of the passages in the coil-end portions is smaller than the draft resistance of the passage around the coil-end portions. As a result, most of the cooling air driven by the cooling fans 33 and 34 passes through the inside of the coil-end portions 54 and 55, thereby cooling each of the coil ends effectively. As a result, the coil-end portions 54 and 55 are cooled very efficiently, thereby lowering the temperature rise of the armature winding 50.

Test results of the heat dissipation of the coil ends are described next.

Figs. 4 and 5 are graphs showing test results using alternators whose rated class are 70 A (ampere), 100 A and 130 A when the space between each of the coil ends varies. Fig. 4 shows a relationship between a mean value of the spaces of the coil ends between the phase-windings and the temperature thereof, or heat dissipation. Each of the X-phase-winding, Y-phase-winding and Z-phase-winding is composed of bundled coil ends, and the axial ends thereof are spaced apart from one another. The spaces of the coil ends between two of the phase-windings are measured at portions except the base portions as mean values including partially bonded portions.

Fig. 5 shows a relationship between a mean value of the spaces of the coil ends in the same phase-winding and temperature of the coil ends when a ratio between a mean value of the spaces of the coil ends of the same phase-winding and the diameter of the wire of the coil ends varies. The spaces of the coil ends are measured at portions except the base portions as mean values including partially bonded portions.

Figs 4 and 5 show that if the ratio of the space to the diameter is 0.1 or larger, the temperature of the armature winding can be maintained at a lowest level (150 C° in Fig. 4, 120 C° in Fig. 5) irrespective of the alternator capacity. On the other hand, even if the ratio becomes about 1.0, the temperature of the armature winding does not change much. If the ratio becomes a value between 1.0 and 1.5, the temperature rises. If the ratio becomes larger than 1, the size of the coil-end portions 54 and 55 increases, increasing the size of the alternator. Therefore, the preferable range of the ratio is approximately between 0.1 and 1.0. In view of the temperature of the armature winding, the ratio being 0.5 or larger is desirable.

If the ratio becomes larger than 1.0, the followings are presumed to raise the temperature. Fig. 6 is an enlarged sectional view illustrating three coil ends 56a-56c of the coil-end portions 54. The cooling air driven by the cooling fan 33 flows between the coil ends as indicated by thick arrows in Fig. 6. The cooling air blows on the upstream sides of coil ends 56a and 56b, which are disposed on the outside surface of the coil-end portions, and also on down stream sides thereof because the coil end 56c is disposed at a downstream side of the air flow passage. The coil end 56c is disposed at the downstream side of the coil ends 56a and 56b to face the space therebetween, thereby receiving the cooling air directly, which branches into an air flow passing through the space between the coil ends 56a and 56c and an air flow passing through the space between the coil ends 56b and 56c along the side and back surfaces of the coil end 56c. The arrows in Fig. 6 indicate the magnitude of the wind power, and the wind power exerted on the coil end 56c does not decrease but rather increase after contraction of the air flow between the coil ends 56a and 56b.

Thus, effective cooling air flowing along the coil ends can be provided by setting proper spaces between the coil ends. If the spaces are too small, an amount of the cooling air decreases and the heat dissipation decreases. On the other hand, if the spaces are too large, the cooling air does not blow on the surfaces of the coil ends properly. Therefore, boundary breakaway layers of the cooling air are formed to lower the heat dissipation.

The cooling fans 33 and 34, which rotate with the rotor, are disposed closely to the inside surfaces of the coil-end portions 54 and 55, which are disposed at a position where the air blow of the cooling fans 33 and 34 is strongest. Therefore, the cooling fans 33 and 34 blows high speed air into the inside of the coil-end portions 54 and 55 in addition to the air driven by the difference in the resistance of the draft between the surrounding and the inside of the coil-end portions 54 and 55, thereby dissipating the heat effectively. Conventional coil-end portions which have dense coil ends without any space are required to have a certain distance from the cooling fans to suppress the noises. For instance, about 5 % of the diameter of the fans is necessary for the distance. Since the coil-end portions according to the present invention have numerous spaces, the pitch noises due to the reflected waves caused by collision of the wind can be minimized, and the pressure wave height can be lowered by the sufficiently low draft resistance, thereby reducing the siren sound. As a result, the coil-end portions can be disposed near the cooling fan as closely as 2 % of the diameter of the cooling fan without increasing the noises.

The above-described embodiment improves the heat dissipation of the coil-end portions and increases the output power. In particular, the temperature rise (due to Joule heat) of an alternator having the auxiliary magnet unit for increasing the output power can be suppressed so that a resinous insulating material having low temperature resistance can be used. The auxiliary magnet unit increases the magnetic flux, so that the number of turns of the armature coil 50 can be reduced and the coil-end portions 54 and 55 can provide the spaces easily, thereby providing a compact, powerful and highly efficient alternator.

In the above-described alternator, each of the coil-end portions has a plurality of evenly-distributed coil ends which are disposed to form a cluster of stars in the passages of the cooling air. However, they can be disposed as shown in Figs. 7-10.

In Fig. 7, clusters of the coil ends 50a, 50b, 50c, 50a', 50b' and 50c' are disposed to have comparatively small spaces so that they are inclined by an angle between θ1-θ4 to the axial direction to extend toward the center of the alternator. Between the clusters, there are wedge-shaped spaces. The coil end 56 in this embodiment is not in contact with the frame 11. There is a much smaller space between the coil end 56 and the frame 11 than the mean value of the spaces between the coil ends.

The clusters of the coil ends 50a and 50b are inclined to the direction of the air blow from the cooling fan 33 to introduce the cooling air to the rear side. The clusters of the coil ends are inclined to the opposite direction to introduce the cooling air to the front side.

As shown in Fig. 8, the clusters of the coil ends 50c, 50d can be formed in line with the axial direction. For instance, the clusters of the coil ends 50c and 50d are formed in each of the X, Y and Z-phase-windings and are put on top of one another to form the coil-end portion 54. There are comparatively large spaces open to the axial end of the coil-end portions 54 between the clusters of the coil ends 50c and 50d. The space between the outer cluster of the coil ends 50c and the frame 11 is smaller than the mean value of the spaces between the coil ends.

The cooling air driven by the cooling fan 33 flows from the axial end of the coil-end portion 54 as indicated by arrows in Fig. 8 and passes through the spaces between the clusters of the coil ends.

The coil-end portions can be tapered to cover the cooling fan as shown in Fig. 9. That is, the coil ends are inclined at an angle θ so that the inside surface of the coil-end portions 54 is in parallel with the outer periphery of the cooling fan 33.

Accordingly, a wider space can be provided for the coil-end portions 54, thereby providing more spaces can be provided between the coil ends. As shown in Fig. 9, the distance D between the coil ends 56 disposed on the outermost layer of the coil-end portions 54 and the frame is about the same as the diameter d of the wire of the coil end 56. Thus, sufficient spaces can be provided between the coil ends to reduce the resistance of draft, thereby introducing the cooling air between the outside surface of the coil-end portions and the frame.

The coil-end portions shown in Fig. 9 can be formed to be in contact with the frame when they are mounted inside the frame to increase the contact surface thereof with the frame, thereby increasing the heat transmission. In addition, all the coil-end portions can be exposed to strong blows of the cooling air so that the cooling fan can be used effectively.

The single-layer wave-wound coils shown in Fig. 2 can be changed to double-layer wave-wound coils. The double-layer wave-wound coils provide not only the coil ends of each of the phase-winding but also the coil ends of two-layered clusters of the coil ends, thereby providing many spaces in the coil-end portions by comparatively simple manufacturing process. Such double-wound coils are disclosed in JP-B2-3-73225 and in Figs. 10, 11 and 12, where double-layer 2π/3-short-pitch wave-wound coils are disclosed. In the double-layer 2π/3-short-pitch wave-wound coils, the coil ends thereof extend from the same slot to opposite directions. Therefore, the spaces between the coil ends can be provided easily. As shown in Fig. 10, one coil of each of the three phase-windings is disposed in every two-pole pitch. In addition, one of the coils 51a, 52a and 53a of a first layer and corresponding one of the coils 51b, 52b and 53 of a second layer are shifted by an electric angle of 60 °C from one another.

As shown in Fig. 1, the auxiliary magnet unit 35 functions a barrier of the cooling air flow and the side walls of the U-shaped openings between the claw pieces of the pole core drive the cooling air radially outward. However, it is possible to have a specific plate 370 on the rotor 300 shown in Fig. 13 instead of the above-described portions. It is also possible to provide fan blades 331 and 341 of the cooling fans 330 extending from the wall surfaces of the U-shaped openings to increase the fan capacity.

The present invention can be applied to an alternator having an outside cooling fan as shown in Fig. 14. The cooling fan 331 disposed on the front side thereof takes the cooling air from inlet openings 140 and 150, which are formed on the outer periphery of the alternator, into the inside of the alternator and discharges it from the alternator. Therefore, coil-end portions 540 and 550 can receive fresh cooling air directly from the outside and can be cooled effectively. It is important that a plurality of coil ends are evenly distributed in the passages of the cooling air, and that the resistance of draft inside the coil-end portions is lower than the that around the coil-end portions.

In the embodiments described above, round wires are used for the armature winding 50. However, wires having some other shape
such as polygonal wire can be used. For instance, a chamfered square wire 560, which is composed of copper wire 560a and resinous insulating layer 560b as shown in Fig. 15, is preferable in view of abrasion resistance, workability and heat dissipation. In order to improve the abrasion resistance and the heat dissipation, the thickness of the insulating layer is reduced to 80 % - 40 % of the thickness of the second class insulating layer, which is as thick as 400 µ - 200µ, for example. Such wires can be obtained as the name of "super work-resistive coating magnet wire" of Furukawa Denko Inc. or "Wear Resistant Thin Layer Magnet Wire" of Sumitomo Denko Inc.

### INDUSTRIAL APPLICABILITY

According to the present invention, spaces between wires of the coil-end portions are provided so that the coil-end portions can be cooled by cooling air passing through the spaces and the temperature rise of the coil-end portions can be suppressed. The present invention can be applied to alternators for vehicles to decrease the size and increase the output power thereof.

## Claims

1. An alternator (1) for a vehicle including:
a pulley (21),
a frame (10) having a plurality of cooling air openings (140, 150) opening in radial directions,
a stator core (40) having a plurality of slots;
a rotor (30) disposed inside said stator core (40) to be driven by said pulley (21),
a cooling fan (331) fixed to an axial end of said rotor (30), and
an armature winding (50) having straight portions disposed in said plurality of slots and
coil end portions (540, 550) extending from said plurality of slots in cooling passages between said cooling fan (331) and said cooling air openings (140, 150) to have strongest air blown by said cooling fan (33, 34), wherein
said armature winding (50) has a plurality of phase-windings each of which has a plurality of axially extending clusters of coil ends (56) radially spaced apart from one another to form large spaces open to an axial end of said coil end portions (540, 550),
said coil ends (56) of each of said clusters are axially spaced apart from one another, and
said clusters are radially spaced apart from one another more than said coil ends (56) of each of said clusters are axially spaced apart.

2. An alternator as claimed in claim 1, wherein said coil ends (56) of radially outer cluster are more spaced apart from one another than said coil ends (56) of radially inner cluster.

3. An alternator as claimed in claim 1 or 2, wherein said clusters are disposed at an end of said stator core (40) near said pulley (21).

4. An alternator as claimed in one of claims 1 to 3, wherein a space between radially outer one of said clusters and said frame (10) is smaller than a mean value of spaces between said coil ends (56) of said one of clusters.

## Patentansprüche

1. Lichtmaschine (1) für ein Fahrzeug, mit:
einer Riemenscheibe (21),
einem Gehäuse (10), welches eine Vielzahl an Kühlluftöffnungen (140, 150) besitzt, die sich in radialer Richtung öffnen,
einem Statorpaket bzw. Ankerkern (40) mit einer Vielzahl an Schlitzen,
einem Rotor (30), der innerhalb des Statorpakets (40) angeordnet ist und durch die Riemenscheibe (21) angetrieben wird,
einem Kühlgebläse (331), das an einem axialen Ende des Rotors (30) befestigt ist,
einer Ankerwicklung (50), welche gerade Abschnitte hat, die in der Vielzahl von Schlitzen angeordnet sind, und
Spulenendabschnitte (540, 550), die sich von der Vielzahl von Schlitzen in Kühlwege zwischen dem Kühlgebläse (331) und den Kühlluftöffnungen (140, 150) erstrecken, um einem sehr starken Luftstrom durch das Luftgebläse (33,34) ausgesetzt zu sein, wobei
die Ankerwicklung (50) eine Vielzahl von Phasenwicklungen aufweist, von welchen jede eine Vielzahl von sich axial erstreckenden Bündeln von Spulenenden (56) hat, die einen radialen Abstand von einander haben, um große Räume zu bilden, die zu einem axialen Ende der Spulenendabschnitte (540, 550) offen sind,
die Spulenenden (56) eines jeden Bündels einen axialen Abstand von einander haben, und wobei
die Bündel einen radialen Abstand voneinander haben, der größer ist als der axiale Abstand der Spulenenden (56) eines jeden Bündels.

2. Lichtmaschine nach Anspruch 1, bei der die Spulenenden (56) eines radial äußeren Bündels einen größeren Abstand von einander haben als die Spulenenden (56) eines radial inneren Bündels.

3. Lichtmaschine nach Anspruch 1 oder 2, bei der die Bündel an einem Ende des Statorpakets (40) in der Nähe der Riemenscheibe (21) angeordnet sind.

4. Lichtmaschine nach Ansprüchen 1 bis 3, bei der ein Raum zwischen einem radial äußeren Bündel und dem Gehäuse (10) kleiner ist als der Mittelwert der Räume zwischen den Spulenenden (56) dieses Bündels.

## Revendications

1. Alternateur (1) pour véhicule comprenant :
une poulie (21),
un châssis (10) présentant une pluralité d'ouvertures d'air de refroidissement (140, 150) ouvrant dans des directions radiales,
un noyau de stator (40) présentant une pluralité de fentes ;
un rotor (30) disposé à l'intérieur dudit noyau de stator (40) pour être entraîné par ladite poulie (21),
un ventilateur de refroidissement (331) fixé à une extrémité axiale dudit rotor (30) et
un enroulement d'induit (50) possédant des portions rectilignes disposées dans ladite pluralité de fentes et
des portions d'extrémités de bobines (540, 550) s'étendant à partir de ladite pluralité de fentes dans des passages de refroidissement entre ledit ventilateur de refroidissement (331) et lesdites ouvertures d'air de refroidissement (140, 150) pour faire souffler l'air le plus puissant par ledit ventilateur de refroidissement (33, 34), dans lequel
ledit enroulement d'induit (50) a une pluralité d'enroulements de phases, chacun d'entre eux présentant une pluralité de faisceaux s'étendant axialement d'extrémités de bobines (56) espacées radialement l'une de l'autre pour former de larges espaces ouverts sur une extrémité axiale desdites portions d'extrémités de bobines (540, 550),
lesdites extrémités de bobines (56) de chacun desdits faisceaux sont espacées axialement l'une de l'autre, et
lesdits faisceaux sont radialement espacés l'un de l'autre plus que lesdites extrémités de bobines (56) de chacun desdits faisceaux ne sont espacées axialement.

2. Alternateur selon la revendication 1, dans lequel lesdites extrémités de bobines (56) du faisceau radialement extérieur sont plus espacées l'une de l'autre que lesdites extrémités de bobines (56) du faisceau radialement intérieur.

3. Alternateur selon la revendication 1 ou 2, dans lequel lesdits faisceaux sont disposés à une extrémité dudit noyau de stator (40) proche de ladite poulie (21).

4. Alternateur selon l'une des revendications 1 à 3, dans lequel un espace entre l'un desdits faisceaux, radialement extérieur, et ledit châssis (10) est plus petit qu'une valeur moyenne des espaces entre lesdites extrémités de bobines (56) de celui, mentionné, des faisceaux.
